# EUROPÄISCHE PATENTSCHRIFT

(11) **EP 1 173 339 B1**
(45) Veröffentlichungstag und Bekanntmachung des Hinweises auf die Patenterteilung: **14.06.2006**
(21) Anmeldenummer: 00926521.6
(22) Anmeldetag: 27.04.2000
(51) Int. Cl.: B60D 1/06

(54) **KUPPLUNGSVORRICHTUNG ZWISCHEN EINEM ZUGFAHRZEUG, INSBESONDERE EINEM ACKERSCHLEPPER, UND EINEM ANHÄNGER**
COUPLING DEVICE BETWEEN A TOWING VEHICLE, ESPECIALLY AN AGRICULTURAL TRACTOR, AND A TRAILER
DISPOSITIF D'ATTELAGE ENTRE UN VEHICULE TRACTEUR, EN PARTICULIER UN TRACTEUR AGRICOLE, ET UNE REMORQUE

(30) Priorität: 30.04.1999 AT 77899
(43) Veröffentlichungstag der Anmeldung: 23.01.2002
(60) Teilanmeldung: 02025901.6
(73) Patentinhaber: Scharmüller, Josef, A-4870 Vöcklamarkt (AT)
(72) Erfinder: Scharmüller, Josef, A-4870 Vöcklamarkt (AT)
(74) Vertreter: Hübscher, Helmut
(86) Internationale Anmeldenummer: PCT/AT2000/000107
(87) Internationale Veröffentlichungsnummer: WO 2000/066376

(56) Entgegenhaltungen:
- EP-A- 0 176 825
- DE-C- 849 629
- FR-A- 903 599
- FR-A- 2 171 745

## Beschreibung

### Technisches Gebiet

Die Erfindung bezieht sich auf eine Kupplungsvorrichtung zwischen einem Zugfahrzeug, insbesondere einem Ackerschlepper, und einem Anhänger mit einer auf einem Kupplungsträger des Zugfahrzeuges angeordneten Kupplungskugel und einer die Kupplungskugel von oben umfassenden, anhängerseitigen Kugelpfanne, wie z.B. aus EP-A-0 176 825 bekannt ist.

### Stand der Technik

Kupplungsvorrichtungen mit einer dem Zugfahrzeug zugeordneten Kupplungskugel und einer an der Deichsel des Anhängers vorgesehenen, die Kupplungskugel von oben umfassenden Kugelpfanne erlauben ein An- und Abkuppeln des Anhängers bei vergleichsweise großen Schwenkwinkeln zwischen der Deichsel und der Längsachse des Zugfahrzeuges. Die möglichen Schwenkbewegungen der Kugelpfanne gegenüber der Kupplungskugel sowohl um eine vertikale als auch um eine horizontale Schwenkachse stellen außerdem vorteilhafte Voraussetzungen für Geländefahrten sicher. Dazu kommt ein durch die Selbstzentrierung der Kugelpfanne vereinfachter Kuppelvorgang, so daß sich aufgrund dieser Eigenschaften der Einsatz solcher Kupplungsvorrichtungen beispielsweise für landwirtschatliche Fahrzeuge anböte, wenn die über diese Kupplungsvorrichtungen aufnehmbaren Stütz- und Anhängelasten nicht auf ein Maß beschränkt wären, das einen solchen Einsatz verbietet. Um die Belastbarkeit der üblicherweise tiefgezogenen Kugelpfannen zu verbessern, wurde bereits vorgeschlagen, den Kugeldurchmesser erheblich zu vergrößern, doch bedingen für die Übernahme hoher Stütz- und Anhängelasten ausreichend große Kugeldurchmesser Sonderkonstruktionen, die den Einsatzbereich dieser Kupplungsvorrichtungen auf Sonderfahrzeuge beschränkt.

### Darstellung der Erfindung

Der Erfindung liegt somit die Aufgabe zugrunde, eine Kupplungsvorrichtung zwischen einem Zugfahrzeug, insbesondere einem Ackerschlepper, und einem Anhänger der eingangs geschilderten Art so auszugestalten, daß große Stütz- und Anhängelasten aufgenommen werden können, ohne den Kugeldurchmesser vergrößern zu müssen.

Die Erfindung löst die gestellte Aufgabe dadurch, daß die Kugelpfanne aus einem zumindest auf der Pfanneninnenseite eine Gußhaut aufweisenden Gußkörper aus einem Eisenwerkstoff besteht.

Durch das Vorsehen eines Gußkörpers als Kugelpfanne konnte in überraschender Weise die Belastbarkeit der Kupplungsvorrichtung durch Stütz- und Anhängelasten unter der Bedingung entscheidend verbessert werden, daß sich der Gußkörper über eine Gußhaut auf der stählemen Kupplungskugel abstützt. Diese Gußhaut bildet offensichtlich eine Zwischenschicht, die die Kraftübertragungsverhältnisse zwischen der Kupplungskugel und dem Gußkörper der Kugelpfanne so beeinflußt, daß eine Überlastung des Gußkörpers der Kugelpfanne auch bei großen Stütz- und Anhängelasten ausgeschlossen werden kann. So konnten über erfindungsgemäße Kupplungsvorrichtungen mit einem Kugeldurchmesser von 80 mm Stützlasten bis zu 5,5 t und Anhängelasten bis zu 60 t ohne Überlastung der Kupplungsvorrichtung aufgenommen werden.

Besonders vorteilhafte Belastungsverhältnisse können dann erreicht werden, wenn die Kugelpfanne eine um 5 bis 12 HRC geringere Härte als die Kupplungskugel aus gehärtetem Stahl aufweist. Bei einem Härteunterschied von 6 HRC konnten für die üblichen Einsatzgebiete optimale Bedingungen für die Lastabtragung über die Kupplungsvorrichtung sichergestellt werden.

Um für die aus einem Gußkörper gebildete Kugelpfanne einfache Anschlußmöglichkeiten beispielsweise an der Deichsel des Anhängers zu schaffen, kann der Gußkörper die Kugelpfanne mit einer Anschlußplatte bilden, die an der Deichsel unabhängig von der jeweiligen Deichselkonstruktion festgeschraubt werden kann.

### Kurze Beschreibung der Zeichnungen

In der Zeichnung ist der Erfindungsgegenstand beispielsweise dargestellt. Es zeigen
- Fig. 1: den zugfahrzeugseitigen Teil einer erfindungsgemäßen Kupplungsvor richtung in einer stimseitigen, zum Teil aufgerissenen Ansicht,
- Fig. 2: die Kupplungsvorrichtung mit der die Kupplungskugel von oben umgreifenden Kugelpfanne in einem Schnitt nach der Linie II-II der Fig. 1 und
- Fig. 3: die Kugelpfanne mit einer angegossenen Anschlußplatte in einer Untersicht in einem größeren Maßstab.

### Bester Weg zur Ausführung der Erfindung

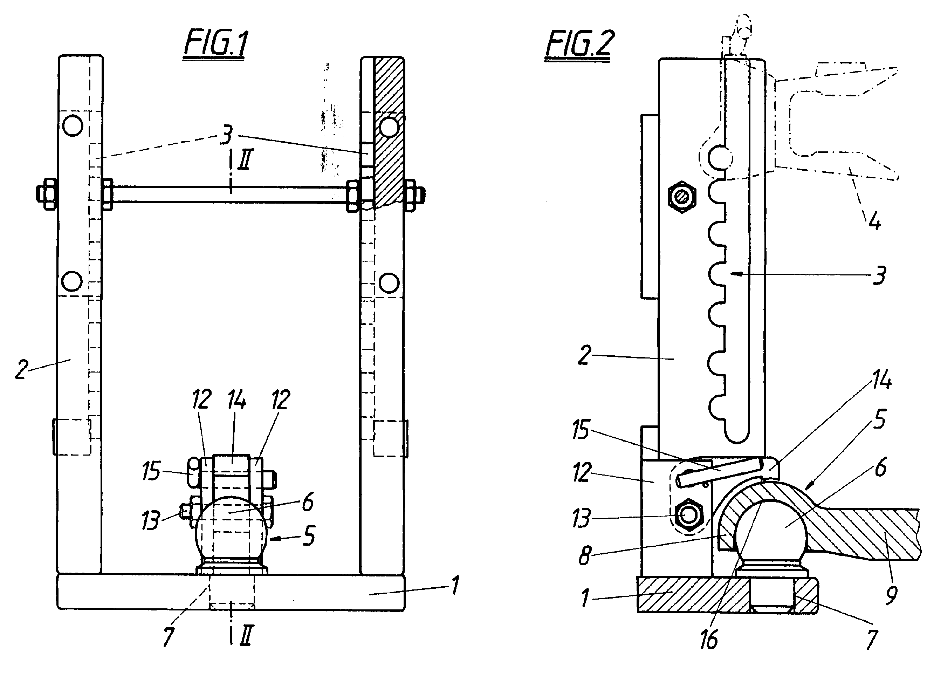

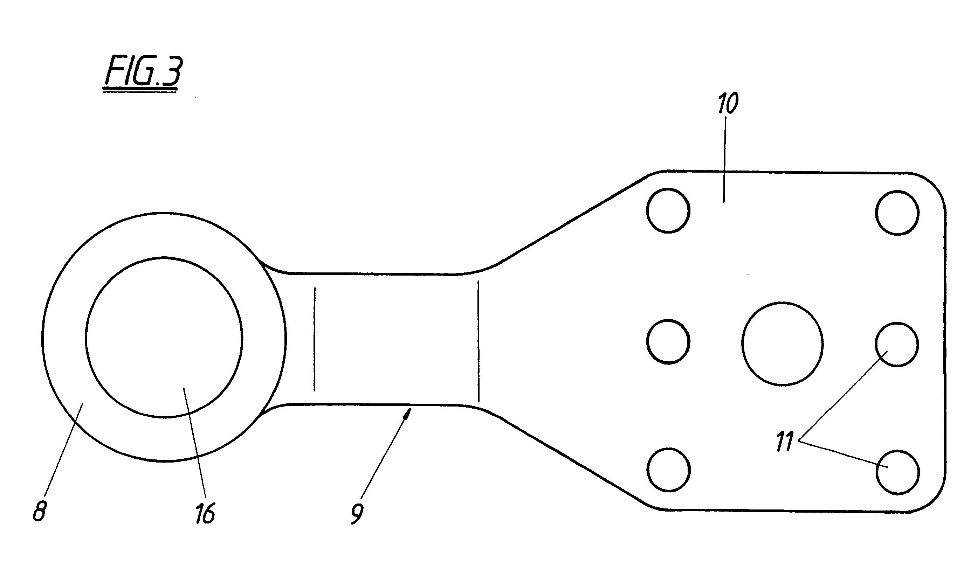

Wie den Fig. 1 und 2 zu entnehmen ist, wird der zugfahrzeugseitige Kupplungsträger 1 von einem in herkömmlicher Weise an einen Ackerschlepper anschließbaren Anbaurahmen 2 gebildet, der eine Vertikalführung 3 für eine der Höhe nach verstellbare und in den einzelnen Höhenstellungen verriegelbare Anhängekupplung 4 herkömmlicher Bauart aufweist, wie dies in der Fig. 2 strichpunktiert angedeutet ist. Neben dieser herkömmlichen Anhängekupplung 4 ist eine wahlweise einsetzbare Kupplungsvorrichtung 5 mit einer Kupplungskugel 6 aus gehärtetem Stahl vorgesehen, die in eine Aufnahmebohrung 7 des Kupplungsträgers 1 eingesetzt ist. Diese Kupplungskugel 6 wirkt mit einer anhängerseitigen Kugelpfanne 8 zusammen, die von einem Gußkörper 9 aus Stahl gebildet wird. Dieser Gußkörper 9 bildet jedoch nicht nur die Kugelpfanne 8, sondem auch eine Anschußplatte 10 für die Kugelpfanne 8, wie dies die Fig. 3 zeigt. Mit Hilfe dieser Anschlußplatte 10 kann die Kugelpfanne 8 beispielsweise an einer Deichsel eines Anhängers befestigt werden, und zwar mit Hilfe von Schrauben, für die in der Anschlußplatte 10 Durchtrittslöcher 11 vorgesehen sind.

Um die von oben auf die Kupplungskugel 6 aufgesetzte Kugelpfanne 8 in dieser Kupplungsstellung verriegeln zu können, ist ein in einem Lagerbock 12 um eine Achse 13 verschwenkbarer Niederhalter 14 vorgesehen, der mit Hilfe einer Stecksicherung 15 in der Verriegelungsstellung gesichert werden kann. Zum Abkuppeln des Anhängers ist demnach zunächst der Niederhalter 14 durch ein Lösen der Stecksicherung 15 freizugeben, bevor der Niederhalter 14 von der Kugelpfanne weggeschwenkt und die Kugelpfanne 8 von der Kupplungskugel 6 abgehoben werden kann. Beim Ankuppeln des Anhängers ist in umgekehrter Reihenfolge der Niederhalter 15 gegen die aufgesetzte Kugelpfanne 8 zu verschwenken und zu sichern.

Der Gußkörper 9 weist zumindest auf der der Kupplungskugel 6 zugekehrten Pfanneninnenseite 16 eine Gußhaut auf, die für die angestrebte Abtragung großer Stütz- und Anhängelasten von der Kugelpfanne 8 auf die Kupplungskugel 6 im Zusammenhang mit der Ausbildung der Kugelpfanne 8 als Gußkörper von ausschlaggebender Bedeutung ist. Erst durch den über eine Gußhaut auf der Kupplungskugel 6 abgestützten Gußkörper 9 wird die Abtragung der sich beispielsweise bei landwirtschaftlichen Anhängern ergebenden großen Stütz- und Anhängelasten bei vergleichsweise kleinen Kugeldurchmessern möglich.

Es braucht wohl nicht besonders hervorgehoben zu werden, daß die Erfindung nicht auf das dargestellte Ausführungsbeispiel beschränkt ist. So kann der Kupplungsträger 1 unmittelbar am Zugfahrzeug vorgesehen sein. Außerdem kann die Verriegelung der Kupplungsstellung der Kupplungsvorrichtung 5 unterschiedlich konstruktiv ausgeführt sein, weil es ja lediglich darauf ankommt, ein unbeabsichtigtes Abheben der Kugelpfanne 8 von der Kupplungskugel 6 zu verhindern.

## Patentansprüche

1. Kupplungsvorrichtung zwischen einem Zugfahrzeug, insbesondere einem Ackerschlepper, und einem Anhänger mit einer auf einem Kupplungsträger des Zugfahrzeuges angeordneten Kupplungskugel und einer die Kupplungskugel von oben umfassenden, anhängerseitigen Kugelpfanne, **dadurch gekennzeichnet, daß** die Kugelpfanne (8) aus einem zumindest auf der Pfanneninnenseite (16) eine Gußhaut aufweisenden Gußkörper (9) aus einem Eisenwerkstoff besteht.

2. Kupplungsvorrichtung nach Anspruch 1, **dadurch gekennzeichnet, daß** die Kugelpfanne (8) eine um 5 bis 12 HRC, vorzugsweise 6 HRC, geringere Härte als die Kupplungskugel (6) aus gehärtetem Stahl aufweist.

3. Kupplungsvorrichtung nach Anspruch 1 oder 2, **dadurch gekennzeichnet, daß** der Gußkörper (9) die Kugelpfanne (8) mit einer Anschlußplatte (10) bildet.

## Claims

1. Coupling device between a towing vehicle, especially an agricultural tractor, and a trailer, with a coupling ball arranged on a coupling carrier of the towing vehicle and a ball cup on the trailer side engaging around the coupling ball from above, **characterised in that** the ball cup (8) consists of a cast body (9) made of an iron material comprising a scale at least on the cup inner side (16).

2. Coupling device according to claim 1, **characterised in that** the ball cup (8) comprises a hardness of 5 to 12 HRC, preferably 6 HRC, less than the coupling ball (6) made of hardened steel.

3. Coupling device according to claim 1 or 2, **characterised in that** the cast body (9) forms the ball cup (8) with a connecting plate (10).

## Revendications

1. Dispositif d'attelage entre un véhicule tracteur, en particulier un tracteur agricole, et une remorque, avec une boule d'attelage, disposée sur le support d'accouplement du véhicule tracteur, et une auge pour boule située côté remorque, entourant la boule d'attelage par le haut, **caractérisé en ce que** l'auge pour boule (8) est formée d'un corps moulé (9), en matériau ferreux, présentant une peau de moulage au moins sur la face intérieure d'auge (16).

2. Dispositif d'attelage selon la revendication 1, **caractérisé en ce que** l'auge pour boule (8) présente une dureté plus faible, de 5 à 12 HRC, de préférence de 6 HRC, que celle de la boule d'attelage (6) formée en acier durci ou trempé.

3. Dispositif d'attelage selon la revendication 1 ou 2, **caractérisé en ce que** le corps moulé (9) forme l'auge pour boule (8) avec une plaque de raccordement (10).
